# EUROPEAN PATENT APPLICATION

(11) **EP 3 543 946 A1**
(43) Date of publication of application: **25.09.2019**
(21) Application number: 19163989.7
(22) Date of filing: 20.03.2019
(51) Int. Cl.: G06Q 30/06, G06Q 10/08

(54) **METHOD AND SYSTEM FOR MANAGING AN ASSET**

(30) Priority: 22.03.2018 FI 20185270
(71) Applicant: eRENT Solutions Oy, 20520 Turku (FI)
(72) Inventor: Aaltonen, Olli, 20520 Turku (FI)
(74) Representative: Suominen, Kaisa Liisa

(57) **Abstract**

Disclosed is a system (200) and method for managing an asset (202), the method comprising assigning a unique identifier (204) to the asset, the unique identifier comprising a first identifier part and a second identifier part; acquiring information of the asset and information of a first entity using the first identifier part of the unique identifier, wherein the first entity is operable to offer the asset for rent; receiving information of a second entity and information of a rent request from the second entity, wherein the second entity is operable to acquire the asset offered for the rent; generating a first asset information and a second asset information using the information associated with the asset, the first entity, the second entity and the rent request; and providing the first asset information to the first entity upon use of the first identifier part of the unique identifier and the second asset information to the second entity based upon the use of the second identifier part of the unique identifier.

## Description

### TECHNICAL FIELD

The present disclosure relates generally to information management; and more specifically, to a method for managing an asset or assets. Furthermore, the present disclosure also relates to a system for managing an asset.

### BACKGROUND

An organization to conduct businesses requires usage of more than one operational item, namely an asset. Furthermore, with the advent of internet technologies, organizations have started renting assets more easily from vendors providing the suitable assets. Often, organizations have to disperse the assets across several different geographical locations for conducting their businesses. In such case, the organizations use one or more resources, namely computer applications, to manage such assets.

However, such conventional techniques of managing the assets encounter multiple technical problems. Firstly, the conventional techniques use one or more resources for managing the assets. In the conventional techniques, for an asset to be tracked one computer resource may be used, for maintaining the data of the asset another computer resource may be used, and for notifying any event related to the asset yet another computer resource may be used. Such usage of more than one computer resource may create a time consuming process. Furthermore, human intervention is crucial for efficient functioning of such techniques, as the one or more resources are not typically communicably coupled with each other. Secondly, the conventional techniques of managing the assets include manually handling records of the assets using computer applications. For example, manually handling records may include entering the records of the assets in a catalogue of records provided by a computer application, namely Microsoft Excel®. Such process of manually handling records is very tedious, cumbersome and prone to human error.

Therefore, in light of the foregoing discussion, there exists a need to overcome the aforementioned drawbacks associated with the conventional techniques of managing assets.

### SUMMARY

The present disclosure seeks to provide a method for managing an asset. The present disclosure also seeks to provide a system for managing an asset. The present disclosure seeks to provide a solution to the existing problem of conventional techniques of managing the assets. An aim of the present disclosure is to provide a solution that overcomes at least partially the problems encountered in the prior art and provides a robust and efficient method for managing assets that eliminates inaccuracies associated with the existing techniques of managing assets.

In one aspect, an embodiment of the present disclosure provides a method for managing an asset, comprising:
- assigning a unique identifier to the asset, the unique identifier comprising a first identifier part and a second identifier part;
- acquiring information of the asset and information of a first entity using the first identifier part of the unique identifier , wherein the first entity is operable to offer the asset for rent;
- receiving information of a second entity and information of a rent request from the second entity, wherein the second entity is operable to acquire the asset offered for the rent;
- generating a first asset information and a second asset information using the information associated with the asset, the first entity, the second entity and the rent request; and
- providing the first asset information to the first entity upon use of the first identifier part of the unique identifier and the second asset information to the second entity based upon the use of the second identifier part of the unique identifier.

In another aspect, an embodiment of the present disclosure provides system for managing an asset, the system comprising:
- a unique identifier couple to the asset the unique identifier comprising a first identifier part and a second identifier part; and
- a server arrangement operable to:
   - assign a unique identifier to the asset based on the first identifier part and the second identifier part of the unique identifier;
   - acquire information of a first entity and information of the asset using the first identifier part of the unique identifier from a first computing device associated with the first entity, wherein the first entity is operable to offer the asset for rent;
   - receive information of a second entity and information of a rent request from the second entity from a second computing device associated with the second entity, wherein the second entity is operable to acquire the asset offered for the rent;
   - generate a first asset information and a second asset information based on the information associated with the first entity, the asset, the second entity and the rent request; and
   - provide the first asset information to the first entity on the first computing device based on the first identifier part of the unique identifier and the second asset information to the second entity on the second computing device based on the second identifier part of the unique identifier.

Embodiments of the present disclosure substantially eliminate or at least partially addresses the aforementioned problems in the prior art, and provide an efficient and user-friendly system for managing the asset.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of steps of a method for managing an asset, in accordance with an embodiment of the present disclosure; and
FIG. 2 is a block diagram of a system for managing an asset, in accordance with an embodiment of the present disclosure; and
FIGs. 3A-C are block diagrams of an exemplary implementations of the unique identifier, in accordance with various embodiments of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a a method for managing an asset, comprising:
- assigning a unique identifier to the asset, the unique identifier comprising a first identifier part and a second identifier part;
- acquiring information of the asset and information of a first entity using the first identifier part of the unique identifier, wherein the first entity is operable to offer the asset for rent;
- receiving information of a second entity and information of a rent request from the second entity, wherein the second entity is operable to acquire the asset offered for the rent;
- generating a first asset information and a second asset information using the information associated with the asset, the first entity, the second entity and the rent request; and
- providing the first asset information to the first entity upon use of the first identifier part of the unique identifier and the second asset information to the second entity based upon the use of the second identifier part of the.

In another aspect, an embodiment of the present disclosure provides a system for managing an asset, the system comprising:
- a unique identifier couple to the asset, the unique identifier comprising a first identifier part and a second identifier part; and
- a server arrangement operable to:
   - assign a unique identifier to the asset based on the first identifier part and the second identifier part of the unique identifier;
   - acquire information of a first entity and information of the asset using the first identifier part of the unique identifier from a first computing device associated with the first entity, wherein the first entity is operable to offer the asset for rent;
   - receive information of a second entity and information of a rent request from the second entity from a second computing device associated with the second entity, wherein the second entity is operable to acquire the asset offered for the rent;
   - generate a first asset information and a second asset information based on the information associated with the first entity, the asset, the second entity and the rent request; and
   - provide the first asset information to the first entity on the first computing device based on the first identifier part of the unique identifier and the second asset information to the second entity on the second computing device based on the second identifier part of the unique identifier.

The aforementioned method and system for managing asset is capable to optimizing the process of handling data related to the asset, tracking the asset and proving information related to the asset in single computer resource, namely a computer application. Consequently, such management of asset provides an efficient system and ensures data integrity. Furthermore, the aforementioned method and system for managing asset is operable to provide customized information (namely, first and second asset information) to different entities (namely, first and second entities) associated to the asset. Additionally, the first and second asset information is provided based on the identifier, associated to the asset, used for accessing information by the first entity and second entity. The identifier comprises two parts, namely a first identifier part and a second identifier part. For example, first asset information is provided to the first entity upon the use of the first identifier part. According to an embodiment, the first identifier part can be a Near-Filed Communication tag. In another example, second asset information is provided to the second entity upon the use of the second identifier part. According to an embodiment, the second identifier part can be a Quick Response Code tag. Consequently, such distribution of information provides relevant information to associated entities, and substantially minimizes providing of duplicate data. The described method and system are efficient, robust and reliable. Furthermore, as identifier has two parts it provides secure environment to provide different access levels to the different entities. Furthermore, the two-part identifier enables more robust unique identifier as it provides redundancy.

The present disclosure provides a method of managing an asset. Throughout the present disclosure, the term *"asset"* as used herein refers to any kind of article, object, item and the like. The asset corresponds to something that can be owned by an entity (such as a person or an organization) and/or can be acquired (e.g. rented) by another entity. Examples of an asset may include a tangible article (e.g. a machine or machinery, an automobile, a camera, etc.), a media content (e.g. a book, a musical piece, etc.), a service, a downloadable digital content of any nature, and so forth. In a first example, the asset may be a piece of equipment, such as an aerial platform, that is owned by the entity, such as a manufacturer "A" of the aerial platform. The method, as used herein, refers to techniques, approaches, means and/or procedures for managing such asset. The techniques for managing the asset comprise controlling the circulation of information related to the asset. Moreover, controlling the circulation of the information includes acquiring and storing information related to the asset. Furthermore, the method is operable to selectively share the information related to the asset with one or more entities related to the asset. The method can be used to manage information related to a plurality of assets. Moreover, the method is operable to acquire and store information related to each asset of the plurality of assets. Furthermore, the method is operable to selectively share information related to each of the asset with one or more entities related to the corresponding asset.

The method comprises assigning the unique identifier to the asset. The unique identifier is an indication capable of identifying an object (such as the asset) that the indication corresponds to. The unique identifier may be in a machine-readable format, or may be in a human readable format. The unique identifier generally corresponds to a unique code/data that is associated with the information related to the object. Therefore, assigning the unique identifier to the asset, as used herein, refers to providing the asset with the unique code/data that is capable of extracting information related to the asset, such as information corresponding to physical attributes of the asset. The unique identifier comprises a first identifier part and a second identifier part. The first identifier part provides unique identifier using a technology or setup different from the second identifier part. This way the unique identifier can be made more robust as both identifier parts can be used for redundancy. Furthermore, the set up enables to allocate the first identifier part and the second identifier part for different parties to use.

Optionally, the assigning the unique identifier to the asset includes identifying a unique identifier coupled to the asset. Throughout the present disclosure, the term "unique identifier" as used herein refers to an element coupled to the asset that is capable of transmitting a piece of machine-readable information to a computing device associated to the asset. The unique identifier coupled to the asset is capable of transmitting unique code/data to the computing device. Furthermore, the unique code/data is operable to initiate an information exchange between the computing device and an electronic device storing the information related to the asset. In an example, the unique identifier may include an image printed on a piece of paper attached to the asset such as the aerial platform.

The first identifier part can thus be a Near-Field Communication tag and the second identifier part can be a Quick Response Code. For example, the second computing device uses Quick Response Code to establish communication with the server arrangement, and the first computing device uses Near-Field Communication tag to establish communication with the server arrangement. In another example, the unique identifier may include an image of a Quick Response Code printed on a piece of paper attached to the asset (such as the aerial platform). In such example, the Quick Response Code may include a unique code, such as a web link, to be accessed by the computing device, such as smart phone. Furthermore, the web link enables the smart phone to access a server arrangement to extract information related to the aerial platform. In another example, the unique identifier may be a Near-Field Communication tag attached to the asset (such as a breaker). In such example, the Near-Field Communication tag may include a unique data such as a Uniform Resource Locator (URL), to be accessed by the computing device, such as smart phone, to access the server arrangement to extract information related to the breaker.

Optionally, the unique identifier can include Quick Response Code and a Near-Field Communication tag. In an example, a Quick Response Code printed on a piece of paper and a Near-Field Communication tag may be attached to the asset, such as weighing machine. In such example, the Quick Response Code may include a unique code and the Near-Field Communication tag may include a unique data to initiate an information exchange related to the asset between the computing device, such as smart phone, and the server arrangement.

Optionally, the unique identifier coupled to the asset can include a multilayer arrangement. The multilayer arrangement includes a protective covering as a first layer. For example, the protective covering may be a polyurethane lens cover. Moreover, the multilayer arrangement includes a second identifier part, namely a Quick Response Code, as a second layer. For example, the second layer may be a Quick Response Code printed on a piece of paper. Furthermore, the multilayer arrangement includes a first identifier part, namely a Near-Field Communication, as a third layer. For example, the third layer may be a Near-Field Communication tag. Additionally, the multilayer arrangement includes a conductive sheet, namely a non-metallic sheet, as a forth layer. For example, the forth layer may be a sheet of ferrite that incur a reduced amount of interference as compared to a metallic sheet. In such example, the third layer may be arranged within the sheet of ferrite. Yet additionally, the multilayer arrangement includes an adhesive layer as a fifth layer. For example, fifth layer may be formed of heavy-duty glue, such as Gorilla Glue®. Furthermore, the adhesive layer can be used to couple the multilayer arrangement to the asset.

The method comprises acquiring information of a first entity and the asset using the unique identifier. Throughout the present disclosure, the term "first entity" as used herein refers to any individuals and/or organization that have the proprietorship of the asset. Referring to the first example, the entity, such as, the manufacturer "A" of the aerial platform, may be an owner of the aerial platform. In an example, the manufacturer "A" may be the first entity for the aerial platform. The first entity is operable to offer the asset for rent. Specifically, offering the asset for rent refers to a provision wherein the first entity is operable to provide the asset to be temporarily obtained by another entity (such as the second entity). In a second example, the first entity "A" may be operable to provide the aerial platform to be rented by another individual or organization.

The acquiring of information of the first entity using the unique identifier (a first information part) refers to extracting data related to the first entity. In an example, the data related to the first entity may be attributes related to the first entity. Optionally, the information of the first entity includes at least one of: a name, contact details, and financial details of the first entity. Referring to the second example, first entity may have a name "A". Furthermore, information of the first entity "A" may include contact details and financial details. Moreover, the contact details of the first entity "A" may include an electronic mail address such as "a@xmail.com", a postal address such as "Albertinkatu 01 X, 0180 HELSINKI", a telephone number such as "+00000 3002642". Additionally, the financial details of the first entity "A" may include an account number "XX00 002XX X13X", a link for digital wallet "YYYYYYYYYYYY" .

Optionally, the information of the asset includes at least one of: a brand name of the asset, a model number of the asset, a serial number of the asset, a price of the asset, at least one image of the asset, a user manual for the asset, a maintenance record of the asset, and a geographical location of the asset. In a third example, the brand name of the asset may refer to an identity of an organization or an individual that manufactures and/or assembles the asset, namely an aerial platform. In such example, the organization may have a name "MACONS". Therefore, in the example, the brand name of the aerial platform may be MACONS®. In another example, the model number of the asset may refer to a version associated to the manufacturing and/or assembling of the asset. Referring to the third example, the model number of the aerial platform may be "M 2.0". In another example, the serial number of the asset may refer to a physical identifier number associated to the asset. Referring to the third example, the serial number of the aerial platform may be "MXC12300A654000B789". In another example, the price of the asset may refer to a monetary value associated with acquiring the asset. Referring to the third example, the price of the aerial platform may be "£100". In another example, the at least one image of the asset may refer to a pictorial representation associated with the aerial platform. Referring to the third example, the information of the aerial platform may include at least one image of the aerial platform. Moreover, the at least one image of the aerial platform may be used to identify the aerial platform. In another example, the user manual for the asset may refer to snippet of texts associated with an operation of the aerial platform. Referring to the third example, the user manual of the aerial platform may include texts of how to use the aerial platform. In another example, the maintenance record of the asset may refer to a digital data associated with the asset that describes the service history and the future servicing and/or repair works of the asset. Referring to the third example, the maintenance record of the aerial platform may include dates relating to past services and future servicing of the aerial platform. In another example, the geographical location of the asset may refer to a digital location data associated with the asset that describes a location wherein the asset is positioned. Referring to the third example, the geographical location of the aerial platform may include latitudinal and longitudinal position of the aerial platform.

Optionally, the unique identifier is used for acquiring information of the first entity and the asset includes communicably coupling a server arrangement to a first computing device, associated with the first entity, using the first identifier part of the unique identifier. Throughout the present disclosure, the term "server arrangement" as used herein relates to at least one programmable or computational entity configured to acquire, process and/or share information related to the asset. For example, the computational entity may include a memory, a processor, a network adapter and the likes. Moreover, the computational entity may be configured to host computer programs and/or routines that provide various services. For example, the services may include providing connectivity between the computational entity and the first computing device for acquiring information related to the asset, processing the information acquired from the first computing device, and thereafter providing the processed information to the first computing device. Throughout the present disclosure, the term "first computing device" as used herein relates to an electronic device associated with (or used by) the first entity. The first computing device may include a camera, a processor, a keypad, a memory, a network interface card, a display and so forth. For example, the first computing device may include, but are not limited to, smartphones, personal digital assistants (PDAs), tablet computers, laptop computers, personal computers, etc. The first computing device is operable to perform tasks associated with the system and the method. In an example, the tasks may include generating a radio-frequency electromagnetic field or capturing picture to initiate data communication with the server arrangement. Moreover, the tasks may include acquiring inputs from the first entity, rendering information related to the asset and the like.

Optionally, the first computing device is communicably coupled to the server arrangement via a wired network, a wireless network, or any combination thereof. Examples of the network between the user-device and the server arrangement include, but are not limited to, Local Area Networks (LANs), Wide Area Networks (WANs), radio network, Internet, and telecommunication networks. Optionally, the first computing device comprises a global positioning tracking unit for detecting a first location of the first computing device. Notably, the global positioning tracking unit relates to specialized equipment operable to detect the first location of the first computing device. Optionally, the global positioning tracking unit includes a signal reception module (namely, a global positioning system receiver module). Moreover, optionally, the signal reception module is a satellite signal reception module operable to receive a signal, indicating the first location of the first computing device, from a satellite. The global positioning tracking unit further comprises a signal transmission module (namely, a global positioning system transmitter module) operable to transmit the detected first location to the server arrangement.

Optionally, the communicably coupling of the server arrangement with the first computing device refers to capturing an image of the unique identifier coupled to the asset by using the first computing device. In an example, the capturing the image of the unique identifier may refer to scanning of the Quick Response Code coupled to the asset. Subsequently, the captured image can enable the first computing device to initiate a data communication with the server arrangement. Alternatively, optionally, the communicably coupling of the server arrangement with the first computing device refers to positioning the first computing device in proximity of the unique identifier coupled to the asset. For example, the first computing device may be positioned at a distance of 1 cm, 2 cm, 3 cm, or 4 cm, from the unique identifier, namely a Near-Field Communication tag. Subsequently, a set of instructions for initiating the data communication with the server arrangement is provided to the first computing device.

Optionally, the data communication between the first computing device and the server arrangement includes transmitting a location of the first computing device, a date of using the unique identifier, a time of using the unique identifier and an information of the first entity to the server arrangement. In an example, the location of the first computing device may be the location of the first computing device detected by the global positioning tracking unit. In another example, the time of using the unique identifier may be a time stamp identifying the use of the identifier by the first computing device. In yet another example, the information of the first entity may be the name of the first entity.

Optionally, the server arrangement provides a user interface to display on the first computing device, upon establishing the data communication. Furthermore, the first entity is operable to input the information related to the asset via the user interface. Optionally, the user interface may include input fields, icons, on-screen keyboards, pull-down menus, buttons, control options, and audio-visual indicators to receive input from the first entity. Specifically, the first entity interacts with the user interface by employing text input, voice input, keypad input, image input, image capture, and so forth. For example, the first entity may input information related to the first entity and the asset (as disclosed above) in the form of text or image in the input fields via a keypad input. In such example, the keypad input may be provided via a virtual keyboard and/or a physical keyboard. Further, the user interface may consequently interact with the first entity by employing text output, voice output, image output, and so forth

The method comprises receiving information of a second entity and a rent request from the second entity, wherein the second entity is operable to acquire the asset offered for the rent. Throughout the present disclosure, the term "second entity" as used herein refers to any individual and/or organization that borrow the asset. Specifically, the second entity borrows the asset which is offered for rent by the first entity. In an example, an individual or an organization "X" may prefer to borrow the asset, namely aerial platform. In such example, the individual or the organization "X" may borrow the aerial platform offered for rent by the first entity "A" (as mentioned in second example). In a fourth example, the individual or the organization "X" is the second entity for the aerial platform.

Optionally, the information of the second entity includes at least one of a name, contact detail and financial detail of the second entity. Referring to the fourth example, the second entity may have a name "X". Furthermore, the information of the second entity "X" may include contact details and financial details. Moreover, the contact details of the second entity "X" may include an electronic mail address such as "X@xmail.com", a postal address such as "Albertinkatu 02Y, 0120 HELSINKI", a telephone number such as "+00000 3002643". Additionally, the financial details of the second entity "X" may include an account number "YY00 002YY Y13Y", a link for digital wallet "ZZZZZZZZ".

Optionally, the information of the rent request includes at least one of a brand name for the asset, a model number for the asset, a rent fee for the asset, a rent period for the asset, and a geographical location for delivery of the asset. In a fifth example, the brand name for the asset may refer to a preferred identity of an organization or an individual that manufactures and/or assembles the asset, namely the aerial platform. In such example, the brand name for the asset may be "MACONS". In another example, the model number for the asset may refer to a preferred version associated with the manufacturing and/or assembling of the asset. Referring to the fifth example, the model number for the aerial platform may be "M 2.0". In yet another example, a rent fee for the asset may refer to a preferred amount of financial consideration to be paid for borrowing the asset over a certain period of time. Referring to the fifth example, the amount of financial consideration to be paid for the aerial platform may be "£500 for a month". In yet another example, rent period for the asset may refer to a preferred time period for which the asset may be borrowed and used. Referring to the fifth example, the time period for which the aerial platform may be borrowed is "3 months". In yet another example, a geographical location for delivery of the asset may refer to a preferred location for providing the second entity with the asset.

Optionally, receiving information of the second entity and the rent request from the second entity includes communicably coupling the server arrangement to a second computing device associated with the second entity. Throughout the present disclosure, the term "second computing device" as used herein relates to an electronic device associated with (or used by) the second entity. Optionally, the second computing device is similar to the first computing device, such as the second computing device includes a camera, a processor, a keypad, a memory, a network interface card, a display and so forth. Optionally, second computing device is configured to execute a user agent application thereon, to connect to the server arrangement. The user agent application establishes a communication between the second computing device and the server arrangement, via a wired network, a wireless network, or any combination thereof. Moreover, the second computing device is operable to render a client user interface thereon, to facilitate interaction between the second entity and the server arrangement, upon execution of the user agent application. Optionally, the client user interface may include input fields icons, on-screen keyboards, pull-down menus, buttons, control options, and audio-visual indicators to receive input from the at least one user. Specifically, the second entity interacts with the client user interface by employing text input, voice input, keypad input, image input, image capture, and so forth. For example, the second entity may input information related to the second entity and the rent request (as disclosed above) in the form of text in the input fields via a keypad input. In such example, the keypad input may be provided via a virtual keyboard and/or a physical keyboard. Further, the client user interface may consequently interact with the second entity by employing text output, voice output, image output, and so forth. Optionally, the second computing device is operable to generate a radio-frequency electromagnetic field or capture a picture to initiate data communication with the server arrangement.

The method comprises generating a first asset information and a second asset information using the information associated with the asset, the first entity, the second entity and the rent request. The method of generating the first asset information and the second asset information refers to executing a process in the server arrangement. The process is configured to consider the information associated with the asset, the first entity, the second entity and the rent request, as input information. Subsequently, the process generates the first and the second asset information as output information. Optionally, the process can be implemented as a software application including one or more routines, data structures, object classes, and/or protocols. Specifically, the software application is configured to analyze the input information and generate the first and the second asset information.

Optionally, generating the first asset information and the second asset information includes identifying corresponding information from the information associated with the asset and the rent request based on respective relations of the first entity and the second entity with the asset. Specifically, generating the first asset information includes detecting the corresponding information associated with the asset and the rent request based on the relation of the first entity with the asset. Furthermore, the relation of the first entity with the asset refers to a condition that describes affiliation of the first entity with the asset. In an example, the first entity "A" may be the owner of the asset, namely aerial platform. Therefore, generating the first asset information may include detecting information included in the rent request and information provided by the first entity. Optionally, first asset information includes at least one of the information of the second entity, the serial number of the asset, the rent fee for the asset, and the rent period for the asset. Referring to the fourth example, the information of the second entity may be the name of the second entity, such as "X", contact details of the second entity, namely "X@xmail.com", "Albertinkatu 02Y, 0120 HELSINKI", and "+00000 3002643", and the financial details of the second entity, "YY00 002YY Y13Y". Referring to the third example, the serial number of the asset, namely the aerial platform may be "MXC12300A654000B789". Referring to the fifth example, the rent fee of the aerial platform may be "£500 for a month" and the rent period of the aerial platform may be "3 months".

Furthermore, generating the second asset information includes detecting the corresponding information associated with the asset and the rent request based on the relation of the second entity with the asset. Furthermore, the relation of the second entity with the asset refers to a condition that describes affiliation of the second entity with the asset. In an example, the second entity "A" may prefer to rent the asset, namely aerial platform. Therefore, generating the second asset information may include detecting information associated with the asset and excluding information provided by the second entity in the rent request. Optionally, the second asset information includes at least one of the information of the first entity, the brand name for the asset, the model number for the asset, the at least one image of the asset, the user manual for the asset, and the maintenance record of the asset. Referring to the second example, the information of the first entity may include the name of the first entity, such as "A", contact details of the first entity, namely, "a@xmail.com", "Albertinkatu 01 X, 0180 HELSINKI", and "+00000 3002642", and financial details of the first entity, namely "XX00 002XX X13X". Referring to the third example, the brand name for the asset, namely, the aerial platform, may be MACONS®, model number for the aerial platform may be "M 2.0", the at least one image may be the pictorial representation associated with the aerial platform, the user manual for the aerial platform may be the snippet of texts associated with an operation of the aerial platform, and the maintenance record of the aerial platform may be the texts including the service history and the future servicing date of the aerial platform.

The method comprises providing the first asset information to the first entity based on the first identifier part of the unique identifier and the second asset information to the second entity based on the second identifier part of the unique identifier. Specifically, providing the first asset information to the first entity refers to transmitting the first asset information from the server arrangement to the first computing devices upon the use of the first identifier part of the unique identifier. For example, the first entity may access the unique identifier coupled to asset via the first computing device, and thereafter the server arrangement may transmit the first asset information to the first computing device. Optionally, the first asset information is provided to the first entity upon the use of the unique identifier includes communicably coupling the server arrangement to the first computing device using the unique identifier. Furthermore, the communicably coupling of the server arrangement with the first computing device refers to positioning the first computing device in proximity of the first identifier part of the unique identifier, for example a Near-Field Communication tag, coupled to the asset. For example, the first computing device may be positioned at a distance of 1 cm, 2 cm, 3 cm or 4 cm, from the Near-Field Communication (NFC) tag. Examples of communication may include wired or wireless communication using one or more communication protocols. Moreover, using the NFC refers to scanning of the NFC via the first computing device. Subsequently, upon establishing the communication, first asset information is transmitted to the first computing device.

Furthermore, providing the second asset information to the second entity refers to transmitting the second asset information from the server arrangement to the second computing devices upon the use of the second identifier part of the unique identifier. For example, the second entity may access the unique identifier coupled to the asset via the second computing device, and thereafter the server arrangement may transmit the second asset information to the second computing device. Optionally, the second asset information is provided to the second entity upon the use of the unique identifier includes communicably coupling the server arrangement to the second computing device using the unique identifier. Furthermore, the communicably coupling of the server arrangement with the second computing device refers to positioning the second computing device in proximity of the second identifier part of the unique identifier, namely a Quick-Response-Code tag, coupled to the asset. For example, the second computing device may be positioned to capture an image of the tag with a camera and with QR-code reading app. In an example, the capturing of the image of the unique identifier may refer to the scanning of the Quick Response Code coupled to the asset. Subsequently, the captured image can enable the second computing device to initiate data communication with the server arrangement. In such example, a set of instructions for initiating data communication with the server arrangement is provided to the second computing device.

In an alternative embodiment, the first computing device is configured to use the second identifier part of the unique identifier and the second computing device is configured to use the first identifier part of the unique identifier.

Furthermore, the first identifier part and the second identifier part can be provided in a monolithic package and attached to the asset.

In an additional embodiment, the first computing device is further configured to read both the first identifier part and the second identifier part of the unique identifier and to form communication with the server arrangement to verify that the first identifier part and the second identifier part are assigned to the unique identifier. Indeed, this may for example prevent situation wherein a third party has changed content of the second identifier part i.e. replaced the Quick-Response code with a fake code.

In an exemplary scenario, the method for managing an asset may be implemented as a digital sharing platform hosted in the server arrangement. In such example, the digital sharing platform may acquire information related to the first entity and the asset from the first entity. In such example, the first entity provides the information via the first computing device. In such example, the first entity uses the first computing device to communicate with the unique identifier coupled to the asset, subsequently a communication may be initiated between the first computing device and the digital sharing platform. The digital sharing platform may provide the first computing device with a user interface to input the information related to the first entity and the asset. In such example, the second entity may access the digital sharing platform by using the second computing device. In such example, the second entity may provide the digital sharing platform information related to the second entity and rent request via a user interface generated in the second computing device. The digital sharing platform is operable to generate the first asset information and the second asset information based on the information associated with the first entity, the asset, the second entity and the rent request. Thereafter, the digital sharing platform is operable to provide the first asset information to the first entity on the first computing device and the second asset information to the second entity on the second computing device, based upon the use of the unique identifier. Furthermore, the digital sharing platform may provide visual indicator to describe the first and second asset information displayed in the first computing device and the second computing device.

In such example, the indicator may be used to notify rent period for the asset. Optionally, the digital sharing platform for asset management may be used by the first entity to track the location of the asset without being rented.

### DETAILED DESCRIPTION OF THE DRAWINGS

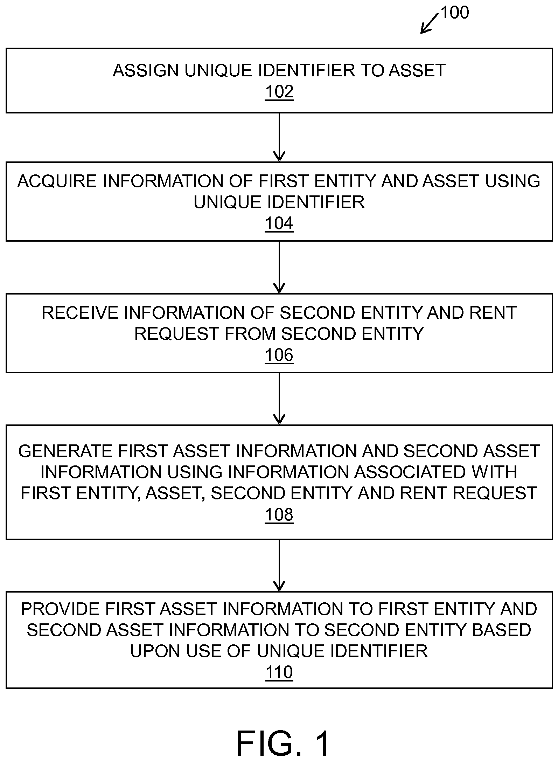

Referring to FIG. 1, illustrated are steps of a method **100** for managing an asset, in accordance with an embodiment of the present disclosure. At a step **102,** a unique identifier is assigned to the asset. At a step **104,** information of a first entity and the asset is acquired using the unique identifier. Additionally, the first entity is operable to offer the asset for rent. At a step **106,** information of a second entity and a rent request is received from the second entity. Additionally, the second entity is operable to acquire the asset offered for the rent. At a step **108,** a first asset information and a second asset information is generated using the information associated with the first entity, the asset, the second entity and the rent request. At a step **110,** the first asset information is provided to the first entity and the second asset information is provided to the second entity based upon the use of the unique identifier.

The steps **102** to **112** are only illustrative and other alternatives can also be provided where one or more steps are added, one or more steps are removed, or one or more steps are provided in a different sequence without departing from the scope of the claims herein. In one example, the method further comprises assigning the unique identifier to the asset includes identifying a unique identifier coupled to the asset. In one example, the method further comprises using the unique identifier for acquiring information of the first entity and the asset includes communicably coupling a server arrangement to a first computing device, associated with the first entity, using the unique identifier. In one example, the information of the first entity includes at least one of: a name, a contact detail, a financial detail of the first entity. In one example, the information of the asset includes at least one of a brand name of the asset, a model number of the asset, a serial number of the asset, a price of the asset, at least one image of the asset, a user manual for the asset, a maintenance record of the asset and a geographical location of the asset. In one example, the method further comprises receiving information of the second entity and the rent request from the second entity includes communicably coupling the server arrangement to a second computing device associated with the second entity. In one example, the information of the second entity includes at least one of a name, a contact detail, a financial detail of the second entity. In one example, the information of the rent request includes at least one of a brand name for the asset, a model number for the asset, a rent fee for the asset, an rent period for the asset and a geographical location for delivery of the asset. In one example, the method further comprises generating the first asset information and the second asset information includes identifying corresponding information from the information associated with the asset and the rent request based on respective relations of the first entity and the second entity with the asset. In one example, the first asset information includes at one of the information of the second entity, the serial number of the asset, the rent fee for the asset and the rent period for the asset. In one example, the second asset information includes at one of the information of the first entity, the brand name for the asset, the model number for the asset, the at least one image of the asset, the user manual for the asset and the maintenance record of the asset. In one example, the method further comprises providing the first asset information to the first entity and the second asset information to the second entity based upon the use of the unique identifier includes communicably coupling the server arrangement to the first and second computing devices using the unique identifier.

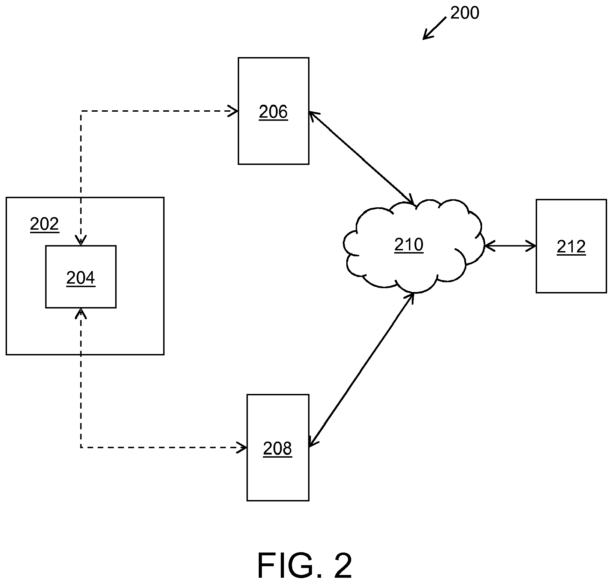

Referring to FIG. 2, illustrated is a block diagram of a system **200** for managing an asset, in accordance with an embodiment of the present disclosure. The system **200** comprises an asset **202,** a unique identifier **204,** a first computing device **206,** a second computing device **208,** a computer network **210,** and server arrangement **212.** Furthermore, the unique identifier **204** coupled to the asset **202** that is operable to be used by the first computing device **206** and the second computing device **208.** Moreover, the first computing device **206** is operated by a first entity (not shown) and the second computing device **208** is operated by a second entity (not shown). Additionally, the unique identifier **204** is operable to initiate communication between the first computing device **206** and the server arrangement **212,** and the second computing device **208** and the server arrangement **212.** The first entity uses the first computing device **206** to provide the server arrangement **212** with information related to the first entity and the asset **202,** furthermore, the second entity uses the second computing device **208** to provide the server arrangement **212** with information related to the second entity and rent request. The server arrangement **212** is configured to generate first asset information and second asset information from the information related to the first entity, the second entity, the asset **202** and the rent request. Furthermore, server arrangement **212** is configured to provide the first asset information to the first computing device **206,** and the second asset information to second computing device **208.** Moreover, the first asset information and the second asset information are provided based upon the use of the unique identifier **204.** The computer network **210** enables the communication of the first computing device **206** with the server arrangement **212;** furthermore, the computer network **210** also enables communication between the second computing device **208** and the server arrangement **212.**

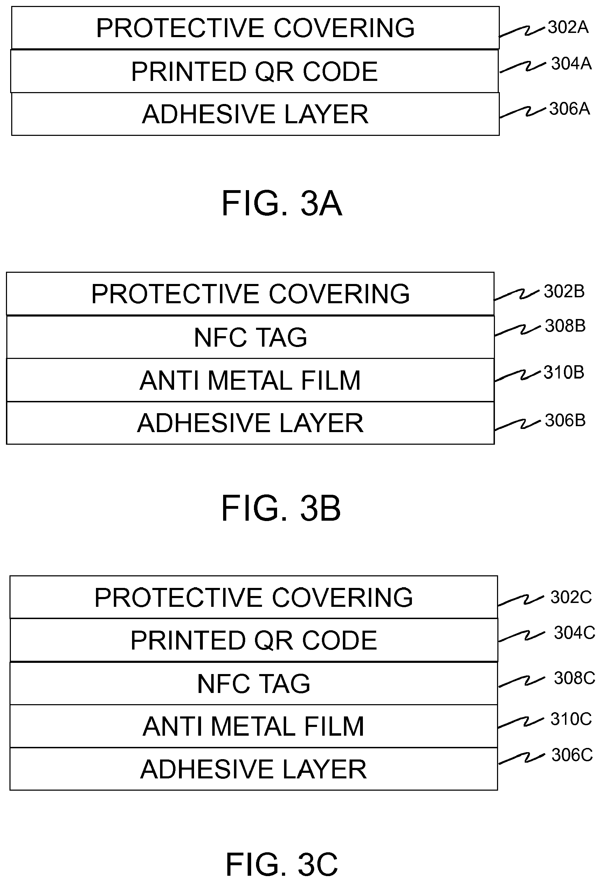

Referring to FIG. 3A-C, illustrated are block diagrams of an exemplary implementation of the unique identifier, in accordance with various embodiments of the present disclosure. Furthermore, the unique identifier is coupled to the asset (such as asset **202** of FIG. 2). The protective layers **302A, 302B, 302C** are polyurethane lens coverings that operable to protect the unique identifier from external factors, such as wear and tear, extreme environment and damages. The adhesive layers **306A, 306B, 306C** are operable to couple the unique identifier to the asset **202.**

As shown in FIG. 3A, the second identifier part of the unique identifier is printed Quick Response Code **304A.** The computing devices (such as first computing device **206** and the second computing device **208** of FIG. 2) use the Quick Response Code **304A** to initiate communication with the server arrangement (such as server arrangement **212**). Furthermore, the protective layer **302A** is transparent to enable scanning of the printed Quick Response Code **304A.**

As shown in FIG. 3B, the first identifier part of the unique identifier is Near-Field Communication tag **308B.** The first computing device **206** and the second computing device **208** can use the Near-Field Communication tag **308B** to initiate communication with the server arrangement **212.** Furthermore, anti-metal film **310B** is a sheet of ferrite that reduced interference while the first computing device **206** and the second computing device **208** use the Near-Field Communication tag **308B.**

As shown in FIG. 3C, the unique identifier includes printed Quick Response Code **304A** and Near-Field Communication tag **308B.** The second computing device **206** uses the Quick Response Code **304A** to initiate communication with the server arrangement **212** and the first computing device **208** uses the Near-Field Communication tag **308B** to initiate communication with the server arrangement **212.** Furthermore, the anti-metal film **310B** reduced interference while the second computing device **208** uses the Near-Field Communication tag **308B.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for managing an asset (202), the method comprising:
- assigning a unique identifier (204) to the asset, the unique identifier comprising a first identifier part and a second identifier part;
- acquiring information of the asset and information of a first entity using the first identifier part of the unique identifier, wherein the first entity is operable to offer the asset for rent;
- receiving information of a second entity and information of a rent request from the second entity, wherein the second entity is operable to acquire the asset offered for the rent;
- generating a first asset information and a second asset information using the information associated with the asset, the first entity, the second entity and the rent request; and
- providing the first asset information to the first entity upon use of the first identifier part of the unique identifier and the second asset information to the second entity based upon the use of the second identifier part of the unique identifier.

2. A method of claim 1, wherein assigning the unique identifier (204) to the asset (202) includes identifying a unique identifier coupled to the asset.

3. A method of claim 2, wherein using the unique identifier (204) for acquiring information of the first entity and the asset (202) includes communicably coupling a server arrangement (212) to a first computing device (206), associated with the first entity, using the first identifier part of the unique identifier.

4. A method according to any one of the preceding claims, wherein the information of the asset (202) includes at least one of a brand name of the asset; a model number of the asset; a serial number of the asset; a price of the asset; at least one image of the asset; a user manual for the asset; a maintenance record of the asset; and a geographical location of the asset.

5. A method according to any of the claims 3-4, wherein receiving information of the second entity and the rent request from the second entity includes communicably coupling the server arrangement (212) to a second computing device (208) associated with the second entity.

6. A method according to any of the preceding claims, wherein the information of the rent request includes at least one of a brand name for the asset (202); a model number for the asset; a rent fee for the asset; a rent period for the asset; and a geographical location for delivery of the asset.

7. A method according to any of the preceding claims, wherein generating the first asset information and the second asset information includes identifying corresponding information from the information associated with the asset (202) and the rent request based on respective relations of the first entity and the second entity with the asset.

8. A method according to claim 7, wherein the second asset information includes at least one of the information of the first entity; the brand name for the asset (202); the model number for the asset; the at least one image of the asset; the user manual for the asset; and the maintenance record of the asset.

9. A method according to any of the claims 3-8, wherein providing the first asset information to the first entity is based upon the use of the first identifier part of the unique identifier (204) and the second asset information to the second entity based upon the use of the second identifier part of the unique identifier includes communicably coupling the server arrangement (212) to the first computing device (206) and second computing device (208) using the unique identifier.

10. A system (200) for managing an asset (202), the system comprising:
- a unique identifier (204) coupled to the asset, the unique identifier comprising a first identifier part and a second identifier part; and
- a server arrangement (212) operable to:
- assign a unique identifier to the asset based on the first identifier part and the second identifier part of the unique identifier;
- acquire information of a first entity and information of the asset using the first identifier part of the unique identifier from a first computing device associated with the first entity, wherein the first entity is operable to offer the asset for rent;
- receive information of a second entity and information of a rent request from the second entity from a second computing device associated with the second entity, wherein the second entity is operable to acquire the asset offered for the rent;
- generate a first asset information and a second asset information based on the information associated with the first entity, the asset, the second entity and the rent request; and
- provide the first asset information to the first entity on the first computing device based on the first identifier part of the unique identifier and the second asset information to the second entity on the second computing device based on the second identifier part of the unique identifier.

11. A system (200) according to claim 10, wherein the first identifier part is a Near-Field Communication tag (308B) and the second identifier part is a Quick Response Code (304A).

12. A system (200) according to claim 10 or 11, wherein each of the first computing device (206) and second computing device (208) includes a communication interface for establishing communication with the server arrangement (212).

13. A system (200) according to claim 11 or 12, wherein the first computing device (206) is configured to use the first identifier part to establish communication with the server arrangement (212), and the second computing device (208) is configured to use the second identifier part to establish communication with the server arrangement.

14. A system (200) according to any of the claims 11-13, wherein the first identifier part and the second identifier part are provided in a monolithic package and attached to the asset (202).

15. A system (200) according to any of the claims 11-14, wherein the first computing device (206) is further configured to read both the first identifier part and the second identifier part of the unique identifier (204) and to form communication with the server arrangement (212) to verify that the first identifier part and the second identifier part are assigned to the unique identifier.
